# EUROPEAN PATENT SPECIFICATION

(11) **EP 4 190 944 B1**
(45) Date of publication and mention of the grant of the patent: **03.09.2025**
(21) Application number: 21850577.4
(22) Date of filing: 29.07.2021
(51) Int. Cl.: C25B 11/052, C25B 11/061, C01G 53/42, C25B 11/04, C25B 11/053, C25B 11/077

(54) **ANODE FOR ALKALINE WATER ELECTROLYSIS AND METHOD FOR PRODUCING SAME**
ANODE FÜR ALKALISCHE WASSERELEKTROLYSE UND VERFAHREN ZUR HERSTELLUNG DAVON
ANODE POUR ÉLECTROLYSE D'EAU ALCALINE ET SON PROCÉDÉ DE PRODUCTION

(30) Priority: 30.07.2020 JP 2020129161
(43) Date of publication of application: 07.06.2023
(73) Proprietor: Kyoto University, Kyoto-shi, Kyoto 606-8501 (JP); NATIONAL UNIVERSITY CORPORATION YOKOHAMA NATIONAL UNIVERSITY, Yokohama-shi Kanagawa 240-8501 (JP); De Nora Permelec Ltd, Fujisawa-shi, Kanagawa 252-0816 (JP)
(72) Inventor: UCHIMOTO, Yoshiharu, Kyoto-shi, Kyoto 606-8501 (JP); UCHIYAMA, Tomoki, Kyoto-shi, Kyoto 606-8501 (JP); MITSUSHIMA, Shigenori, Yokohama-shi, Kanagawa 240-8501 (JP); KURODA, Yoshiyuki, Yokohama-shi, Kanagawa 240-8501 (JP); NAGASAWA, Kensaku, Yokohama-shi, Kanagawa 240-8501 (JP); NISHIKI, Yoshinori, Fujisawa-shi, Kanagawa 252-0816 (JP)
(74) Representative: Wächtershäuser & Hartz Patentanwaltspartnerschaft mbB
(86) International application number: PCT/JP2021/028171
(87) International publication number: WO 2022/025208

(56) References cited:
- WO-A1-2018/047961
- WO-A1-2019/172160
- JP-A- 2015 086 420
- ZHU KAIYUE, WU TAO, ZHU YUE, LI XUNING, LI MINGRUN, LU RUIFENG, WANG JUNHU, ZHU XUEFENG, YANG WEISHEN: "Layered Fe-Substituted LiNiO 2 Electrocatalysts for High-Efficiency Oxygen Evolution Reaction", ACS ENERGY LETTERS, vol. 2, no. 7, 14 July 2017 (2017-07-14), pages 1654 - 1660, XP055903439, ISSN: 2380-8195, DOI: 10.1021/acsenergylett.7b00434
- GUPTA ASHA, CHEMELEWSKI WILLIAM D., BUDDIE MULLINS C., GOODENOUGH JOHN B.: "High-Rate Oxygen Evolution Reaction on Al-Doped LiNiO 2", ADVANCED MATERIALS, VCH PUBLISHERS, DE, vol. 27, no. 39, 1 October 2015 (2015-10-01), DE , pages 6063 - 6067, XP055903445, ISSN: 0935-9648, DOI: 10.1002/adma.201502256

## Description

### Technical Field

The present invention relates to an alkaline water electrolysis anode and a method for producing the same.

### Background Art

Hydrogen is secondary energy which is suitable for storage and transportation and has small environmental load, and therefore a hydrogen energy system using hydrogen as an energy carrier has been attracting attention. Currently, hydrogen is mainly produced by steam reforming of fossil fuel, or the like. However, from the viewpoint of problems of global warming and exhaustion of fossil fuel, hydrogen production by water electrolysis using renewable energy, such as solar power generation and wind power generation, is important in generic technology. Water electrolysis is low cost, suitable for enlargement of scale, and therefore is a predominant technique for hydrogen production.

Among the elements which are used for water electrolysis, many of anode materials have an oxygen generation overpotential of exceeding 0.3 V under actual operation conditions. It can be said that there is room for significant improvement in the oxygen generation overpotential as compared to the fact that hydrogen generation and chlorine generation overpotentials utilized in current electrolysis industry are around 0.1 V. Note that when electric power having a large output fluctuation, such as renewable energy, is used as a power source for water electrolysis, an anode capable of stably retaining excellent catalytic activity over a long period of time is in the development stage and has not yet been put into practical use.

Current practical water electrolysis is largely divided into two. One is alkaline water electrolysis, in which a high-concentration alkali aqueous solution is used for an electrolyte. The other is solid polymer electrolyte water electrolysis, in which a solid polymer electrolyte (SPE) membrane is used for an electrolyte. When large-scale hydrogen production is performed by water electrolysis, it is said that alkaline water electrolysis, in which an inexpensive material, such as an iron group metal including nickel and the like, is used, is more suitable than solid polymer electrolyte water electrolysis, in which an electrode using a large amount of an expensive noble metal is used.

With respect to the high-concentration alkali aqueous solution, electric conductivity becomes high as the temperature increases, but corrosiveness also becomes high. Therefore, the upper limit of the operation temperature is controlled to about 80 to about 90°C. The electrolytic cell voltage has been improved to 2 V or less at a current density of 0.6 Acm⁻² by the development of constitutional materials and various piping materials for an electrolytic cell, which are high-temperature resistant and resistant to a high-concentration alkali aqueous solution, and the development of a low-resistivity separator and an electrode which has an enlarged surface area and has a catalyst applied thereon.

A nickel-based material which is stable in a high-concentration alkali aqueous solution is used as an alkaline water electrolysis anode, and it has been reported that in the case of alkaline water electrolysis using a stable power source, a nickel-based anode has a life of several decades or longer (Non-Patent Literatures 1 and 2). However, when renewable energy is used as a power source, severe conditions, such as sudden start/shutdown and abrupt load fluctuation, are frequent, and therefore deterioration in performance of the nickel-based anode has been problematic (Non-Patent Literature 3).

Both of the reaction of producing a nickel oxide and the reaction of reducing the produced nickel oxide progress on a metal surface. Therefore, elimination of an electrode catalyst formed on the metal surface is facilitated with the progress of these reactions. When the electric power for electrolysis is not supplied, the electrolysis stops, and the nickel-based anode is retained at a potential lower than the oxygen generation potential (1.23 V vs. RHE) and higher than the potential of a hydrogen generation cathode, which is a counter electrode, (0.00 V vs. RHE). In the electrolytic cell, electromotive force due to various chemical species is generated, so that the anode potential is retained low, and the reaction of reducing the nickel oxide is facilitated by the progress of a battery reaction. The RHE is the abbreviation of Reversible Hydrogen Electrode.

A current generated by the battery reaction leaks through piping that connects cells in the case of, for example, an electrolytic stack obtained by combining a plurality of cells, such as an anode chamber and a cathode chamber. Examples of the countermeasure for preventing such leakage of a current include a method of allowing a minute current to flow continuously during shutdown. However, to allow a minute current to flow continuously during shutdown, special power source control is needed, and oxygen and hydrogen are generated at all times, and therefore there is a problem that excessive labor has to be done in terms of operation management. In addition, preventing a battery reaction by removing liquid immediately after shutdown for the purpose of intentionally avoiding a reverse current state is possible, but it cannot be said that such measure is always an adequate approach when operation with electric power having a large output fluctuation, such as renewable energy, is supposed.

In the past, platinum group metals, platinum group metal oxides, valve metal oxides, iron group oxides, lanthanide group metal oxides, and the like have been utilized as a catalyst for oxygen generation anode (anode catalyst) which is used for alkaline water electrolysis. As other anode catalysts, alloy-based anode catalysts using nickel as a base, such as Ni-Co and Ni-Fe; nickel having an enlarged surface area; spinel-based anode catalysts, such as Co₃O₄ and NiCo₂O₄; perovskite-based electrically conductive oxides (ceramic materials), such as LaCoO₃ and LaNiO₃; noble metal oxides; oxides containing a lanthanide group metal and a noble metal; and the like have also been known (Non-Patent Literature 3).

In recent years, as the oxygen generation anode which is used for high-concentration alkaline water electrolysis, an alkaline water electrolysis anode obtained by forming a lithium-containing nickel oxide catalyst layer containing lithium and nickel in a predetermined molar ratio on the surface of a nickel substrate (Patent Literature 1) and an alkaline water electrolysis anode obtained by forming a catalyst layer containing a nickel-cobalt-based oxide, and an iridium oxide or a ruthenium oxide on the surface of a nickel substrate (Patent Literature 2) have been proposed.

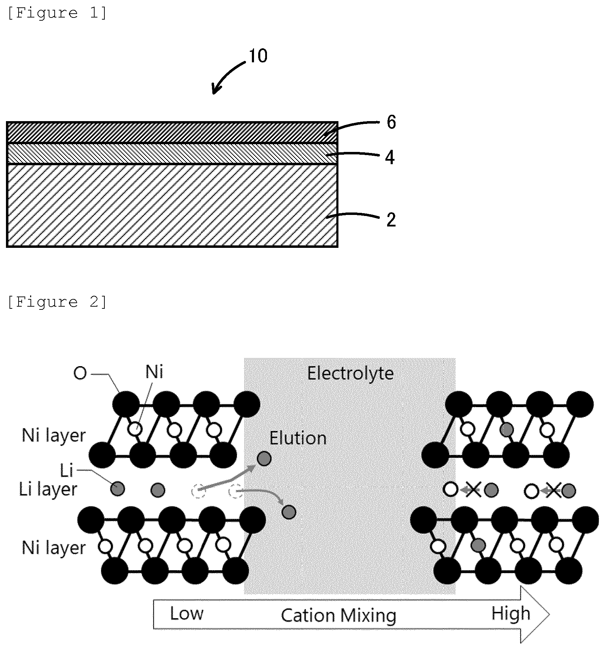

It has been reported that the oxygen gas overpotential of a layered rock salt type LiNiO₂ catalyst decreases with the addition of Li and the activity becomes highest at the time when the composition is represented by Li_{0.5}Ni_{0.5}O (Non-Patent Literature 4). A catalyst material having high activity and durability is designed using a layered structure, generation of Ni³⁺, and a particular electronic structure derived from high electron conductivity. It is considered that by doping Li⁺ into NiO, mobility of Li, a local structure, and an electronic state of an active site (Ni) are adjusted, which enables mixing of Ni into the 3a site of Li and suppression of elution by diffusion paths of Li⁺, and thereby high oxygen generation activity is retained when the composition is represented by Li_{0.5}Ni_{0.5}O (Figure 2).

The amount of cations mixing between the 3a site and 3b site can be controlled by adjusting the thermal treatment conditions in the air or in oxygen. From the results of Rietvelt analysis and ICP, it has been found that the lattice constant changes in proportion to the amount of Li by Vegard's law. In addition, it has been known that a sample in which the amount of cations mixed is largest exhibits high durability in an oxygen generation test in a KOH solution. Deterioration of a catalyst is considered to be caused by elimination of Li from a crystal, and the deterioration of the catalyst can be suppressed by increasing the amount of cations mixed. Further, it has been known by operando XAFS measurement during the electrolysis reaction that the layered salt structure of LiₓNiO₂, which is a basic crystalline structure, is retained even after the elimination of Li. Material design to prevent the elution of Li into an electrolyte is important in utilizing a Li-containing metal oxide.

Furthermore, it has been reported that LiNi_{0.8}Al_{0.2}O₂ having a layered rock salt type structure exhibits high oxygen generation activity (Non-Patent Literature 5). It is presumed that Al plays a role of stabilizing the structure during polarization due to a synergistic effect with Ni. The layered rock salt structure has been developed by a thermal treatment in an oxygen gas. Attention is paid on Al³⁺ doping because of stabilization of Ni³⁺ in the LiNiO₂ layer and suppression of mixing of Ni²⁺ in the Li⁺ layer. Moreover, it has been reported that LiNi_{0.8}Fe_{0.2}O₂ having a layered rock salt type structure exhibits high oxygen generation activity (Non-Patent Literature 6).

In addition, a method for producing an anode being such that a nanosheet material containing a NiFe hydroxide and a Ce oxide is formed on a nickel form and being used for electrolysis of water (Patent Literature 3) and a method for producing an anode such that a nanosheet material containing a NiFe hydroxide, Co, Mo, and P is formed on a nickel form (Patent Literature 4) have been proposed. Note that it has been disclosed that a material obtained by forming a NiFe hydroxide on a nickel form is applicable to a sensor for an ampicillin-, nitrate ion-, or tetracycline-based antibiotic (Patent Literatures 5 and 6).

### Citation List

### Patent Literature

Patent Literature 1: Japanese Patent Laid-Open No. 2015-86420
Patent Literature 2: Japanese Patent Laid-Open No. 2017-190476
Patent Literature 3: Chinese Patent Application Publication No. 108447703
Patent Literature 4: Chinese Patent Application Publication No. 110344078
Patent Literature 5: Chinese Patent Application Publication No. 109254049
Patent Literature 6: Chinese Patent Application Publication No. 108107101

### Non-Patent Literature

Non-Patent Literature 1: P.W.T.Lu, S.Srinivasan, J.Electrochem.Soc.,125,1416(1978)
Non-Patent Literature 2: C.T.Bowen, Int.J.Hydrogen Energy,9,59(1984)
Non-Patent Literature 3: S. Mitsushima et al., Electrocatalysis, 8, 422(2017)
Non-Patent Literature 4: Fu, G.; Wen, X.; Xi, S.; Chen, Z.; Li, W.; Zhang, J.; Anton, T.; Wu, R. Qi, D.; Du, Y.; Cheng, J.; Kelvin, H. L. Z. Tuning the Electronic Structure of NiO via Li Doping for the Fast Oxygen Evolution Reaction. Chem Mater, 2019, 31, 419-428
Non-Patent Literature 5: Gupta, A.; Chemelewski, W. D.; Buddie Mullins, C.; Goodenough, J. B., High-rate oxygen evolution reaction on Al-doped LiNiO2. Adv Mater 2015, 27 (39), 6063-7
Non-Patent Literature 6: Zhu, K.; Wu, T.; Zhu, Y.; Li, X.; Li, M.; Lu, R.; Wang, J.; Zhu, X.; Yang, W., Layered Fe-Substituted LiNiO2 Electrocatalysts for High-Efficiency Oxygen Evolution Reaction. ACS Energy Letters 2017, 2 (7), 1654-1660

### Summary of Invention

### Technical Problem

However, there has been a problem that even in the alkaline water electrolysis anodes proposed in Patent Literatures 1 and 2, when electric power having a large output fluctuation, such as renewable energy, is used as a power source, the performance is likely to be lowered, making it difficult to use the anodes stably over a long period of time. In addition, it cannot necessarily be said that even LiNi_{0.8}Al_{0.2}O₂ reported in Non-Patent Literature 5 and LiNi_{0.8}Fe_{0.2}O₂ reported in Non-Patent Literature 6 are sufficiently highly active, and there has been still room for further improvement. Note that both of the production methods proposed in Patent Literatures 3 and 4 are complicated and cannot necessarily be said to be practical.

The present invention has been completed in view of such problems of the conventional techniques, and an object of the present invention is to provide an alkaline water electrolysis anode such that even when electric power having a large output fluctuation, such as renewable energy, is used as a power source, the electrolysis performance is unlikely to be deteriorated and excellent catalytic activity is retained stably over a long period of time. In addition, another object of the present invention is to provide a method for producing the alkaline water electrolysis anode.

### Solution to Problem

As a result of diligent studies in order to solve the problems, the present inventors have found that by doping aluminum (Al) and iron (Fe) into a lithium-containing nickel oxide (LiNiO₂) having a layered rock salt type structure, these synergistically act to stabilize Ni³⁺, and thereby a highly active catalyst is obtained, and have completed the present invention.

That is, according to the present invention, an alkaline water electrolysis anode described below is provided.
[1] An alkaline water electrolysis anode provided with: an electrically conductive substrate at least a surface of which contains nickel or a nickel base alloy; and a catalyst layer disposed on the surface of the electrically conductive substrate, the catalyst layer containing a lithium composite oxide having a rock salt type structure, wherein the lithium composite oxide contains lithium (Li), nickel (Ni), iron (Fe), and aluminum (Al), and has an atom ratio of Li/Ni/Fe/Al/O of (0.4 to 1.1)/(0.4 to 0.8)/(0.05 to 0.2)/(0.05 to 0.2)/2.0.
[2] The alkaline water electrolysis anode according to [1], wherein a ratio (I₍₀₀₃₎/I₍₁₀₄₎) of diffraction peak intensity I₍₀₀₃₎ of a (003) plane to diffraction peak intensity I₍₁₀₄₎ of a (104) plane of the catalyst layer, as measured by X-ray diffraction, is 0.1 to 1.9.
[3] The alkaline water electrolysis anode according to [1] or [2], further provided with an intermediate layer disposed between the electrically conductive substrate and the catalyst layer, the intermediate layer containing a lithium-containing nickel oxide represented by compositional formula LiₓNi₂₋ₓO₂ wherein 0.02≤x≤0.5.
   Further, according to the present invention, a method for producing an alkaline water electrolysis anode, described below, is provided.
[4] A method for producing an alkaline water electrolysis anode, including: a step of coating an aqueous solution of a precursor containing a lithium component, a nickel component, an iron component, and an aluminum component on a surface of an electrically conductive substrate at least the surface of which contains nickel or a nickel base alloy; and a step of subjecting the electrically conductive substrate on which the aqueous solution of the precursor has been coated to a thermal treatment at 400 to 800°C in an oxygen-containing atmosphere, thereby forming a catalyst layer containing a lithium composite oxide having a rock salt type structure on the surface of the electrically conductive substrate, wherein the lithium composite oxide contains lithium (Li), nickel (Ni), iron (Fe), and aluminum (Al), and has an atom ratio of Li/Ni/Fe/Al/O of (0.4 to 1.1)/(0.4 to 0.8)/(0.05 to 0.2)/(0.05 to 0.2)/2.0.
[5] The method for producing an alkaline water electrolysis anode according to [4], wherein the electrically conductive substrate on which the aqueous solution of the precursor has been coated is subjected to a thermal treatment in an oxygen-containing atmosphere having an oxygen partial pressure of 0.5 atm or higher.

### Advantageous Effects of Invention

The present invention can provide an alkaline water electrolysis anode being such that even when electric power having a large output fluctuation, such as renewable energy, is used as a power source, the electrolysis performance is unlikely to be deteriorated, and excellent catalytic activity is retained over a long period of time. Further, the present invention can provide a method for producing the alkaline water electrolysis anode.

### Brief Description of Drawings

[Figure 1] Figure 1 is a section view schematically showing one embodiment of an alkaline water electrolysis anode of the present invention.
[Figure 2] Figure 2 is a schematic diagram showing a state of an oxygen generation anode that is used in an alkaline water electrolysis method.
[Figure 3] Figure 3 is a graph showing X-ray diffraction patterns of LiNiO₂ having a layered rock salt type structure.
[Figure 4] Figure 4 is a graph showing X-ray diffraction patterns of Li(Ni_{0.8}Fe_{0.2})_{0.9}Al_{0.1}O₂ having a layered rock salt type structure.
[Figure 5] Figure 5 is a graph showing results (cyclic voltammograms) of cyclic voltammetry measurement.

### Description of Embodiments

### <Alkaline Water Electrolysis Anode>

Figure 1 is a section view schematically showing one embodiment of an alkaline water electrolysis anode of the present invention. As shown in Figure 1, an alkaline water electrolysis anode 10 of the present embodiment is provided with an electrically conductive substrate 2, an intermediate layer 4 formed on the surface of the electrically conductive substrate 2, and a catalyst layer 6 formed on the surface of the intermediate layer 4. Hereinafter, the details on the alkaline water electrolysis anode of the present invention (hereinafter, also simply referred to as "anode").

### <Electrically Conductive Substrate>

The electrically conductive substrate 2 is an electric conductor that conducts electricity for electrolysis and is an element having a function as a carrier that carries the intermediate layer 4 and the catalyst layer 6. At least a surface of the electrically conductive substrate 2 (the surface on which the intermediate layer 4 and the catalyst layer 6 are formed) is formed with nickel or a nickel base alloy. That is, the whole of the electrically conductive substrate 2 may be formed with nickel or a nickel base alloy, or only the surface of the electrically conductive substrate 2 may be formed with nickel or a nickel base alloy. Specifically, the electrically conductive substrate 2 may be such that a coating of nickel or a nickel base alloy is formed on the surface of a metal material, such as iron, stainless steel, aluminum, or titanium, by plating or the like.

The thickness of the electrically conductive substrate is preferably 0.05 to 5 mm. The shape of the electrically conductive substrate is preferably a shape having an opening for removing bubbles of oxygen, hydrogen, and the like to be produced by electrolysis. For example, an expanded mesh or a porous expanded mesh can be used as the electrically conductive substrate. When the electrically conductive substrate has a shape having an opening, the aperture ratio of the electrically conductive substrate is preferably 10 to 95%.

### (Intermediate Layer)

The anode of the present invention is preferably provided with an intermediate layer disposed between the electrically conductive substrate and the catalyst layer. As shown in Figure 1, the intermediate layer 4 is a layer formed on the surface of the electrically conductive substrate 2. The intermediate layer 4 suppresses corrosion or the like of the electrically conductive substrate 2 and fixes the catalyst layer 6 stably to the electrically conductive substrate 2. In addition, the intermediate layer 4 also serves as a role of supplying a current quickly to the catalyst layer 6. The intermediate layer 4 is preferably formed with a lithium-containing nickel oxide represented by composition formula LiₓNi₂₋ₓO₂ (0.02≤x≤0.5). When x in the compositional formula is less than 0.02, the electric conductivity is somewhat insufficient in some cases. On the other hand, when x exceeds 0.5, the physical strength and the chemical stability are somewhat lowered in some cases. The intermediate layer 4 formed with a lithium-containing nickel oxide represented by the compositional formula has enough electric conductivity for electrolysis, and exhibits excellent physical strength and chemical stability even after the use for a long period of time.

The thickness of the intermediate layer is preferably 0.01 **µ**m or more and 100 **µ**m or less, more preferably 0.1 **µ**m or more and 10 **µ**m or less. When the thickness of the intermediate layer is less than 0.01 **µ**m, the above-described functions are not exhibited. On the other hand, even if the thickness of the intermediate layer is set in such a way as to exceed 100 **µ**m, the above-described functions are unlikely to be exhibited because the voltage loss due to the resistance in the intermediate layer is large, and it is somewhat disadvantageous in terms of production costs or the like in some cases.

### (Catalyst Layer)

The catalyst layer 6 is a layer that is formed on the surface of the intermediate layer 4 and has catalytic ability. By interposing the intermediate layer 4, the catalyst layer 6 is more firmly fixed on the electrically conductive substrate 2.

The catalyst layer is formed with a lithium composite oxide having a rock salt type structure. Then, this lithium composite oxide contains lithium (Li), nickel (Ni), iron (Fe), and aluminum (Al), and has an atom ratio of Li/Ni/Fe/Al/O of (0.4 to 1.1)/(0.4 to 0.8)/(0.05 to 0.2)/(0.05 to 0.2)/2.0. When the catalyst layer formed with a lithium composite oxide having a composition in which Li, Ni, Fe, Al, and O are represented by the above-described ratio is provided, thereby the electrolysis performance is unlikely to be deteriorated and excellent catalyst activity can be retained stably over a long period of time even when electric power having a large output fluctuation, such as renewable energy, is used as a power source.

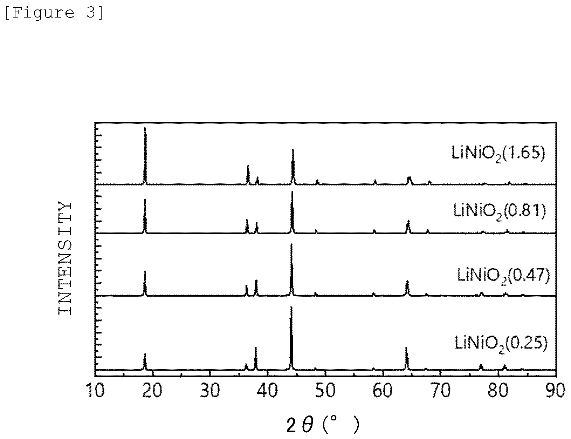

The lithium composite oxide that forms the catalyst layer has a layered rock salt type structure. The rock salt type structure of the lithium composite oxide is developed, thereby the electrolysis performance is more unlikely to be deteriorated and further excellent catalytic activity is retained stably. Whether the lithium composite oxide that forms the catalyst layer has a rock salt type structure or not can be checked by analyzing the catalyst layer by X-ray diffraction. For example, diffraction peaks around 2**θ** = 18° corresponding to the (003) plane and around 2**θ** = 44° corresponding to the (104) plane of the catalyst layer are measured by X-ray diffraction using Cu-K**α** rays. When the relative intensity ratio between these diffraction peaks (I₍₀₀₃₎/I₍₁₀₄₎) is larger, it indicates that the layered rock salt type structure has been developed more. More specifically, the ratio (I₍₀₀₃₎/I₍₁₀₄₎) of the diffraction peak intensity I₍₀₀₃₎ of the (003) plane to the diffraction peak intensity I₍₁₀₄₎ of the (104) plane of the catalyst layer, measured by X-ray diffraction, is preferably 0.1 to 1.9, more preferably 0.2 to 1.8. Figure 3 is a graph showing X-ray diffraction patterns of LiNiO₂ having a layered rock salt type structure. It has been ascertained that the ratio (I₍₀₀₃₎/I₍₁₀₄₎) of the diffraction peak intensity I₍₀₀₃₎ of the (003) plane to the diffraction peak intensity I₍₁₀₄₎ of the (104) plane is 0.1 to 1.9 by Rietvelt analysis of these X-ray diffraction patterns. Note that it has also been confirmed that when the X-ray diffraction patterns of lithium complex oxides which are used for the anode of the present embodiment and contain Li, Ni, Fe, and Al are analyzed by Rietvelt analysis, the ratio (I₍₀₀₃₎/I₍₁₀₄₎) of the diffraction peak intensity I₍₀₀₃₎ of the (003) plane to the diffraction peak intensity I₍₁₀₄₎ of the (104) plane is within the range of 0.1 to 1.9 and the lithium complex oxides, as well as LiNiO₂ described above, have a layered rock salt type structure.

The thickness of the catalyst layer is preferably 0.01 **µ**m or more and 100 **µ**m or less, more preferably 0.1 **µ**m or more and 10 **µ**m or less. When the thickness of the catalyst layer is less than 0.01 **µ**m, the above-described functions are not exhibited. On the other hand, even if the thickness of the catalyst layer is set in such a way as to exceed 100 **µ**m, the above-described functions are not exhibited sufficiently because the voltage loss due to the resistance in the catalyst layer is large, and it is somewhat disadvantageous in terms of production costs or the like in some cases.

### <Method for Producing Alkaline Water Electrolysis Anode>

Next, a method for producing an alkaline water electrolysis anode of the present invention will be described. The method for producing an anode, which will be described below, is a method for suitably producing the above-described alkaline water electrolysis anode. The method for producing an anode of the present invention includes: a step (first coating step) of coating an aqueous solution of a precursor containing a lithium component, a nickel component, an iron component, and an aluminum component on a surface of an electrically conductive substrate; and a step (catalyst layer formation step) of subjecting the electrically conductive substrate on which the aqueous solution of the precursor has been coated to a thermal treatment at 400 to 800°C in an oxygen-containing atmosphere, thereby forming a catalyst layer containing a lithium composite oxide having a rock salt type structure on the surface of the electrically conductive substrate.

Note that, if necessary, an intermediate layer can be disposed between the electrically conductive substrate and the catalyst layer, as described above. A method for producing an anode in which an intermediate layer is disposed further includes, prior to the above-described first coating step, a step (second coating step) of coating an aqueous solution containing a lithium ion and a nickel ion on the surface of the electrically conductive substrate; and a step (intermediate layer formation step) of subjecting the electrically conductive substrate on which the aqueous solution has been coated to a thermal treatment, thereby forming, on the surface of the electrically conductive substrate, an intermediate layer containing a lithium-containing nickel oxide represented by compositional formula LiₓNi₂₋ₓO₂ wherein 0.02≤x≤0.5.

### (Pre-treatment Step)

The electrically conductive substrate is preferably subjected to a chemical etching treatment in advance for the purpose of removing contamination particles of a metal, an organic substance, and the like on the surface before forming the intermediate layer and the catalyst layer. The consumption of the electrically conductive substrate by the chemical etching treatment is preferably set to about 30 g/m² or more and about 400 g/m² or less. In addition, the surface of the electrically conductive substrate is preferably subjected to a roughening treatment in advance for the purpose of enhancing the adhesiveness with the intermediate layer and the catalyst layer. Examples of the means for the roughening treatment include a blast treatment in which a powder is sprayed, an etching treatment using an acid that can dissolve the substrate, and plasma spraying.

### (Second Coating Step)

In the second coating step, an aqueous solution containing a lithium ion and a nickel ion is coated on the surface of the electrically conductive substrate. The intermediate layer is formed by a so-called thermal decomposition method. When the intermediate layer is formed by the thermal decomposition method, an aqueous solution of a precursor of the intermediate layer is first prepared. As the precursor containing a lithium component, a known precursor, such as lithium nitrate, lithium carbonate, lithium chloride, lithium hydroxide, and a lithium carboxylate, can be used. Examples of the lithium carboxylate include lithium formate and lithium acetate. As the precursor containing a nickel component, a known precursor, such as nickel nitrate, nickel carbonate, nickel chloride, and a nickel carboxylate, can be used. Examples of the nickel carboxylate include nickel formate and nickel acetate. It is particularly preferable to use at least one of a lithium carboxylate and a nickel carboxylate in particular as the precursor because thereby a dense intermediate layer can be formed even when calcination is performed at a low temperature, as will be described later.

### (Intermediate Layer Formation Step)

In the intermediate layer formation step, the electrically conductive substrate on which the aqueous solution has been coated is subjected to a thermal treatment. Thereby, the intermediate layer containing a lithium-containing nickel oxide represented by compositional formula LiₓNi₂₋ₓO₂ (0.02≤x≤0.5) can be formed on the surface of the electrically conductive substrate. The thermal treatment temperature at the time when the intermediate layer is formed by the thermal decomposition method can appropriately be set. When the decomposition temperature of the precursor and the production costs are taken into consideration, the thermal treatment temperature is preferably set to 450 to 600°C, more preferably 450 to 550°C. For example, the decomposition temperature of lithium nitrate is about 430°C, and the decomposition temperature of nickel acetate is about 373°C. When the thermal treatment temperature is set to 450°C or higher, thereby each component can more surely be decomposed. When the thermal treatment temperature is set in such a way as to exceed 600°C, the oxidation of the electrically conductive substrate easily progresses, and the electrode resistance increases to bring about an increase in the voltage loss in some cases. The thermal treatment time may appropriately be set taking the reaction rate, the productivity, the oxidation resistance at the surface of the intermediate layer, and the like into consideration.

By appropriately setting the number of times of coating of the aqueous solution in the above-described coating step, the thickness of the intermediate layer to be formed can be controlled. Note that: the coating and drying of the aqueous solution may be repeated for every layer until the uppermost layer is formed, and thereafter the thermal treatment may be performed on the whole layers, or the coating of the aqueous solution and the thermal treatment (pre-treatment) may be repeated for every layer to until the uppermost layer is formed, and the thermal treatment may thereafter be performed on the whole layers. The temperature of the pre-treatment and the temperature of the thermal treatment on the whole layers may be the same or different. In addition, the time for the pre-treatment is preferably made shorter than the time for the thermal treatment on the whole layers.

### (First Coating Step)

In the first coating step, an aqueous solution of a precursor containing a lithium component, a nickel component, an iron component, and an aluminum component is coated on the surface of the electrically conductive substrate. The catalyst layer is formed by a so-called thermal decomposition method. When the catalyst layer is formed by the thermal decomposition method, an aqueous solution of a precursor of the catalyst layer is first prepared. As the precursor containing a lithium component, a known precursor, such as lithium nitrate, lithium carbonate, lithium chloride, lithium hydroxide, and a lithium carboxylate, can be used. Examples of the lithium carboxylate include lithium formate and lithium acetate. As the precursor containing a nickel component, a known precursor, such as nickel nitrate, nickel carbonate, nickel chloride, and a nickel carboxylate, can be used. Examples of the nickel carboxylate include nickel formate and nickel acetate. It is particularly preferable to use at least one of a lithium carboxylate and a nickel carboxylate in particular as the precursor because thereby a dense catalyst layer can be formed even when calcination is performed at a low temperature, as will be described later.

As the precursor containing an iron component, a known precursor, such as iron nitrate, iron carbonate, iron chloride, and an iron carboxylate, can be used. As the precursor containing an aluminum component, a known precursor, such as aluminum nitrate, aluminum carbonate, aluminum chloride, and an aluminum carboxylate, can be used.

### (Catalyst Layer Formation Step)

In the catalyst layer formation step, the electrically conductive substrate on which the aqueous solution of the precursor has been coated is subjected to a thermal treatment at 400 to 800°C in an oxygen-containing atmosphere. Thereby, the catalyst layer containing a lithium composite oxide having a rock salt type structure can be formed on the surface of the electrically conductive substrate. When the decomposition temperature of the precursor, the production costs, and the like are taken into consideration, the thermal treatment temperature is more preferably set to 450 to 550°C. When the thermal treatment temperature is set to 450°C or higher, thereby each component can more surely be decomposed. When the thermal treatment temperature is excessively high, the oxidation of the electrically conductive substrate easily progresses, and the electrode resistance increases to bring about an increase in the voltage loss in some cases. The thermal treatment time may appropriately be set taking the reaction rate, the productivity, the oxidation resistance at the surface of the catalyst layer, and the like into consideration.

For example, lithium nitrate, nickel nitrate, iron nitrate, and aluminum nitrate are dissolved in an aqueous citric acid solution obtained by dissolving citric acid in ultrapure water such that proportions of the respective nitrates are intended in the composition, and thereby an aqueous solution of a precursor for forming a catalyst layer can be obtained. Note that the precursor obtained by evaporating the solution of the precursor to dryness is calcined, for example, at 600 to 800°C for 2 to 15 hours, and thereby an alkaline water electrolysis catalyst (target substance) can be obtained.

The oxygen partial pressure in the oxygen-containing atmosphere at the time when the electrically conductive substrate on which the aqueous solution of the precursor has been coated is subjected to the thermal treatment is preferably set to 0.5 atm or higher, more preferably 0.9 atm or higher. In addition, the flow rate of the gas containing oxygen to be supplied is preferably controlled to 5 mL/min or less, more preferably 2.5 mL/min, in terms of oxygen. When the flow rate of the gas is excessively large (excessively fast), Li is likely to excessively volatilize and production of the oxide is excessively accelerated in some cases, and therefore the composition of the catalyst is likely to deviate from the intended composition in some cases.

### <Use of Alkaline Water Electrolysis Anode>

The alkaline water electrolysis anode of the present invention can be used as an oxygen generation anode at the time when alkaline water is electrolyzed. That is, use of the anode of the present invention can form an electrolytic cell, such as an alkaline water electrolytic cell. The types, constitution, and the like of the cathode and separator to be used together with the above-described anode are not particularly limited, and a cathode and a separator which are used in conventional alkaline water electrolysis can be used.

### (Cathode)

As the cathode, a substrate made of a material that is bearable to alkaline water electrolysis and a catalyst having a small cathode overpotential are preferably selected and used. As the cathode substrate, a nickel substrate, or a cathode substrate obtained by forming an active cathode by coating the nickel substrate can be used. Examples of the shape of the cathode substrate include an expanded mesh and a porous expanded mesh in addition to a plate shape.

The cathode material includes porous nickel having a large surface area, a Ni-Mo-based material, and the like. Besides, the cathode material includes Raney nickel-based materials, such as Ni-Al, Ni-Zn, and Ni-Co-Zn; sulfide-based materials, such as Ni-S; and hydrogen absorbing alloy-based materials, such as Ti₂Ni; and the like. The catalyst preferably has characteristics of low hydrogen overpotential, high stability against short-circuit, high poisoning resistance, and the like. As other catalysts, metals, such as platinum, palladium, ruthenium, and iridium, and oxides thereof are preferable.

### (Separator)

As the electrolysis separator, asbestos, non-woven fabric, an ion-exchange membrane, a porous polymer membrane, and a composite membrane of an inorganic substance and an organic polymer, and the like can be used. Specifically, an ion-permeable separator such that organic fiber cloth is incorporated in a mixture of a hydrophilic inorganic material, such as a calcium phosphate compound and calcium fluoride, and an organic binding material, such as polysulfone, polypropylene, and polyvinylidene fluoride, can be used. In addition, an ion-permeable separator such that stretched organic fiber cloth is incorporated in a film-forming mixture of an inorganic hydrophilic substance in the form of particles, such as oxides and hydroxides of antimony and zirconium, and an organic binder, such as a fluorocarbon polymer, polysulfone, polypropylene, polyvinyl chloride, and polyvinyl butyral can be used.

By using an alkaline water electrolytic cell using the anode of the present invention as a constitutional element, a high-concentration alkali aqueous solution can be electrolyzed. The alkali aqueous solution that is used as the electrolyte is preferably an aqueous solution of an alkaline metal hydroxide, such as potassium hydroxide (KOH) or sodium hydroxide (NaOH). The concentration of the alkali aqueous solution is preferably 1.5% by mass or more and 40% by mass or less. In addition, the concentration of the alkali aqueous solution is preferably 15% by mass or more and 40% by mass or less because the electric conductivity is large, and the electric power consumption can be suppressed. Further, when the costs, the corrosiveness, the viscosity, the operability, and the like are taken into consideration, the concentration of the alkali aqueous solution is preferably 20% by mass or more and 30% by mass or less.

### Examples

Hereinafter, the present invention will specifically be described based on Examples, but the present invention is not limited to these Examples. Note that "parts" and "%" in Examples and Comparative Examples are each on a mass basis unless otherwise noticed.

### <Production of Alkaline Water Electrolysis Catalyst (Standard Substance)>

### (Production Example 1)

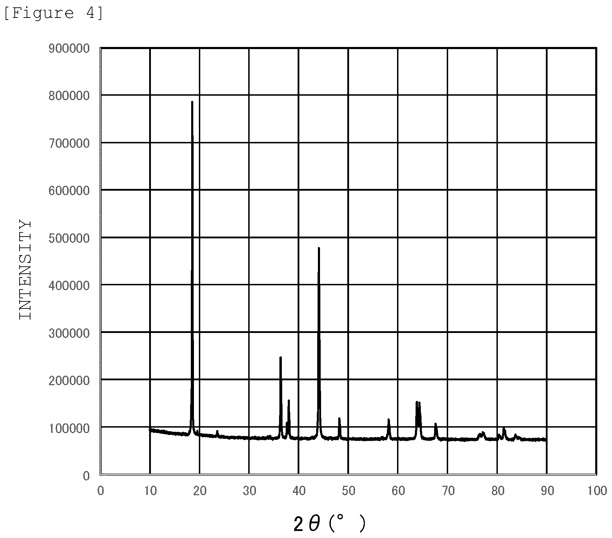

Lithium nitrate, nickel nitrate, iron nitrate, and aluminum nitrate were dissolved in an aqueous citric acid solution obtained by dissolving citric acid in ultrapure water such that the respective nitrates formed a predetermined composition, and thus an aqueous solution of a precursor was prepared. The prepared aqueous solution of the precursor was evaporated to dryness to obtain the precursor. The obtained precursor was calcined at 800°C for 15 hours to obtain a target substance in the form of a powder. A solution obtained by dissolving part of the obtained standard substance in an acid was used as a sample, and the composition was analyzed by inductively coupled plasma (ICP) emission spectrophotometry. As a result, it was ascertained that the composition of the obtained target substance (catalyst) is represented by "Li(Ni_{0.8}Fe_{0.2})_{0.9}Al_{0.1}O₂." Figure 4 is a graph showing X-ray diffraction patterns of Li(Ni_{0.8}Fe_{0.2})_{0.9}Al_{0.1}O₂ having a layered rock salt type structure. This X-ray diffraction was analyzed by Rietvelt analysis to ascertain that the ratio (I₍₀₀₃₎/I₍₁₀₄₎) of the diffraction peak intensity I₍₀₀₃₎ of the (003) plane to the diffraction peak intensity I₍₁₀₄₎ of the (104) plane is 1.76.

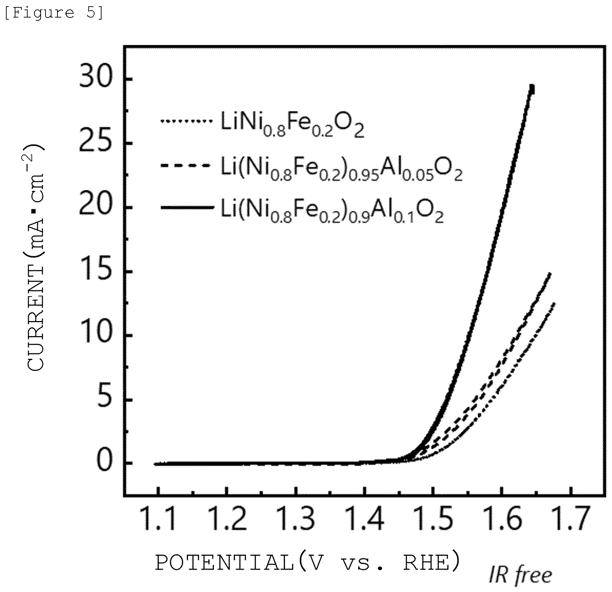

To 2 mL of ethanol, 5 mg of the target substance (catalyst) and 45 **µ**L of a 5% Nafion solution were added, and a resultant mixture was shaken using ultrasonic waves for 1 hour to prepare a catalyst ink. On a RDE (GC) electrode having a diameter of 5 mm, 24 **µ**L (catalyst: 0.3 mg/cm²) of the prepared catalyst ink was coated. Then, electrolysis operation was performed at 30±1°C using a three-electrode cell made of PFA, described below. Note that cyclic voltammetry (0.5 to 1.6 V vs. RHE, 200 mV/s, 100 cycles) was performed as a pre-treatment, and a current was measured at a potential of 1.1 to 1.7 V and a sweep rate of 5 mV/s while the electrode was rotated at 1,600 rpm. As a result, the current value at 1.6 V was 20 mA/cm². The measurement result (cyclic voltammogram) of the cyclic voltammetry is shown in Figure 5.

### [Three-electrode Cell]

- Working electrode: Ni wire etched with boiling hydrochloric acid for 6 minutes
- Reference electrode: reversible hydrogen electrode (RHE)
- Counter electrode: Pt coil
- Electrolyte: 250 mL of 1.0M KOH aqueous solution

### (Production Example 2)

A target substance (catalyst) whose composition is represented by "Li(Ni_{0.8}Fe_{0.2})_{0.95}Al_{0.05}O₂" was prepared in the same manner as in Production Example 1 described above except that the composition of the aqueous solution of the precursor was adjusted. In addition, it was ascertained that the value of I₍₀₀₃₎/I₍₁₀₄₎ of the prepared target substance is 1.76. Further, a three-electrode cell was prepared and electrolysis operation was performed in the same manner as in Production Example 1 described above. As a result, the current value at 1.6 V was 7 mA/cm². The measurement result (cyclic voltammogram) of the cyclic voltammetry is shown in Figure 5.

### (Comparative Production Example 1)

A target substance (catalyst) whose composition is represented by "LiNi_{0.8}Fe_{0.2}O₂" was prepared in the same manner as in Production Example 1 described above except that the composition of the aqueous solution of the precursor was adjusted. In addition, it was ascertained that the value of I₍₀₀₃₎/I₍₁₀₄₎ of the prepared target substance is within the range of 0.1 to 1.9. Further, a three-electrode cell was prepared and electrolysis operation was performed in the same manner as in Production Example 1 described above. As a result, the current value at 1.6 V was 5 mA/cm². The measurement result (cyclic voltammogram) of the cyclic voltammetry is shown in Figure 5.

### (Comparative Production Example 2)

A target substance (catalyst) whose composition is represented by "LiNi_{0.8}Al_{0.2}O₂" was prepared in the same manner as in Production Example 1 described above except that the composition of the aqueous solution of the precursor was adjusted. In addition, it was ascertained that the value of I₍₀₀₃₎/I₍₁₀₄₎ of the prepared target substance is within the range of 0.1 to 1.9. Further, a three-electrode cell was prepared and electrolysis operation was performed in the same manner as in Production Example 1 described above. As a result, the current value at 1.6 V was 5 mA/cm².

### <Production of Anode>

### (Example 1)

A nickel expanded mesh (10 cm × 10 cm, LW × 3.7 SW × 0.9 ST × 0.8 T) on which a chemical etching treatment was performed by immersing the nickel expanded mesh for 6 minutes in 17.5% hydrochloric acid heated to near the boiling point was prepared as an anode substrate. This expanded mesh was subjected to a blast treatment (0.3 MPa) with alumina particles of 60 mesh, and was then immersed for 6 minutes in 20% hydrochloric acid heated to near the boiling point to perform a chemical etching treatment. An aqueous solution containing components to be a precursor of a lithium-containing nickel oxide was coated, with a brush, on the surface of the anode substrate after the chemical etching treatment, and was then dried at 80°C for 15 minutes. Subsequently, the anode substrate was subjected to a thermal treatment at 600°C for 15 minutes in an oxygen atmosphere. The treatments from the coating of the aqueous solution to the thermal treatment were repeated 20 times to obtain an intermediate product having an intermediate layer (composition: Li_{0.5}Ni_{1.5}O₂) formed on the surface of the anode substrate.

Lithium nitrate, nickel nitrate, iron nitrate, and aluminum nitrate were dissolved in an aqueous citric acid solution such that the respective nitrates formed a predetermined composition, and thus an aqueous solution of a precursor was obtained. The obtained aqueous solution of the precursor was coated, with a brush, on the surface of the intermediate layer of the intermediate product obtained above and then dried at 80°C for 15 minutes. Subsequently, the intermediate product was subjected to a thermal treatment at 600°C for 15 minutes in a pure oxygen atmosphere. The treatments from the coating of the aqueous solution of the precursor to the thermal treatment were repeated 20 times to obtain an anode in which a catalyst layer (composition: Li(Ni_{0.8}Fe_{0.2})_{0.9}Al_{0.1}O₂) was formed on the surface of the intermediate layer. Note that it was ascertained that the value of I₍₀₀₃₎/I₍₁₀₄₎ of the formed catalyst layer is 1.76.

A small-sized zero-gap type electrolytic cell using a neutral separator was prepared using: the obtained anode; a separator (trade name "Zirfon" manufactured by AGFA-Gevaert NV); and an active cathode having a catalyst layer containing Ru and Pr oxide and formed thereon. The area of the electrodes was set to 19 cm². An electrolyte (25% KOH aqueous solution) was supplied to the anode chamber and the cathode chamber forming the electrolytic cell to perform electrolysis in each chamber at a current density of 6 kA/m² for 6 hours in each chamber. The overpotential on that occasion was 250 mV. Subsequently, the anode and the cathode were brought into a short-circuit state (0 kA/m²) to shut down the electrolysis for 15 hours. Shutdown tests in which the operation from the electrolysis to the shutdown was defined as 1 cycle were conducted. As a result, it was ascertained that the voltage was kept stable in the shutdown tests of 20 times.

### (Comparative Example 1)

An anode was produced in the same manner as in Example 1 described above except that the composition of the catalyst layer was changed to "LiNi_{0.8}Fei_{0.2}O₂." Further, electrolysis was performed in the same manner as in Example 1 described above to find that the overpotential was 350 mV.

### Industrial Applicability

The alkaline water electrolysis anode of the present invention is suitable as, for example, an alkaline water electrolysis anode that forms electrolysis equipment or the like in which electric power having a large output fluctuation, such as renewable energy, is used as a power source.

### Reference Signs List

- 2: Electrically conductive substrate
- 4: Intermediate layer
- 6: Catalyst layer
- 10: Alkaline water electrolysis anode

## Claims

1. An alkaline water electrolysis anode comprising:
an electrically conductive substrate at least a surface of which comprises nickel or a nickel base alloy; and
a catalyst layer disposed on the surface of the electrically conductive substrate, the catalyst layer comprising a lithium composite oxide having a rock salt type structure, wherein
the lithium composite oxide comprises lithium (Li), nickel (Ni), iron (Fe), and aluminum (Al), and has an atom ratio of Li/Ni/Fe/Al/O of (0.4 to 1.1)/(0.4 to 0.8)/(0.05 to 0.2)/(0.05 to 0.2)/2.0.

2. The alkaline water electrolysis anode according to claim 1, wherein a ratio (I₍₀₀₃₎/I₍₁₀₄₎) of diffraction peak intensity I₍₀₀₃₎ of a (003) plane to diffraction peak intensity I₍₁₀₄₎ of a (104) plane of the catalyst layer, as measured by X-ray diffraction, is 0.1 to 1.9.

3. The alkaline water electrolysis anode according to claim 1 or 2, further comprising an intermediate layer disposed between the electrically conductive substrate and the catalyst layer, the intermediate layer comprising a lithium-containing nickel oxide represented by compositional formula LiₓNi₂₋ₓO₂ wherein 0.02≤x≤0.5.

4. A method for producing an alkaline water electrolysis anode, comprising:
a step of coating an aqueous solution of a precursor comprising a lithium component, a nickel component, an iron component, and an aluminum component on a surface of an electrically conductive substrate at least the surface of which comprises nickel or a nickel base alloy; and
a step of subjecting the electrically conductive substrate on which the aqueous solution of the precursor has been coated to a thermal treatment at 400 to 800°C in an oxygen-containing atmosphere, thereby forming a catalyst layer comprising a lithium composite oxide having a rock salt type structure on the surface of the electrically conductive substrate, wherein
the lithium composite oxide comprises lithium (Li), nickel (Ni), iron (Fe), and aluminum (Al), and has an atom ratio of Li/Ni/Fe/Al/O of (0.4 to 1.1)/(0.4 to 0.8)/(0.05 to 0.2)/(0.05 to 0.2)/2.0.

5. The method for producing an alkaline water electrolysis anode according to claim 4, wherein the electrically conductive substrate on which the aqueous solution of the precursor has been coated is subjected to a thermal treatment in an oxygen-containing atmosphere having an oxygen partial pressure of 0.5 atm or higher.

## Patentansprüche

1. Eine Anode für die alkalische Wasserelektrolyse, umfassend:
ein elektrisch leitfähiges Substrat, dessen Oberfläche zumindest Nickel oder eine Nickelbasislegierung umfasst; und
eine auf der Oberfläche des elektrisch leitfähigen Substrats angeordnete Katalysatorschicht, die ein Lithium-Kompositoxid mit einer Steinsalzstruktur umfasst, wobei
das Lithium-Kompositoxid Lithium (Li), Nickel (Ni), Eisen (Fe) und Aluminium (Al) umfasst und ein Atomverhältnis Li/Ni/Fe/Al/O von (0,4 bis 1,1)/(0,4 bis 0,8)/(0,05 bis 0,2)/(0,05 bis 0,2)/2,0 aufweist.

2. Die Anode für alkalische Wasserelektrolyse gemäß Anspruch 1, wobei das Verhältnis (I₍₀₀₃₎/I₍₁₀₄₎) der Beugungspeakintensität I₍₀₀₃₎ einer (003)-Ebene zur Beugungspeakintensität I₍₁₀₄₎ einer (104)-Ebene der Katalysatorschicht, gemessen durch Röntgenbeugung, 0,1 bis 1,9 beträgt.

3. Die Anode für alkalische Wasserelektrolyse gemäß Anspruch 1 oder 2, ferner umfassend eine Zwischenschicht zwischen dem elektrisch leitfähigen Substrat und der Katalysatorschicht, wobei die Zwischenschicht ein lithiumhaltiges Nickeloxid der Zusammensetzungsformel LixNi₂-xO₂ mit 0,02≤x≤0,5 enthält.

4. Ein Verfahren zur Herstellung einer Anode für die alkalische Wasserelektrolyse, umfassend:
einen Schritt des Aufbringens einer wässrigen Lösung einer Vorstufe, die eine Lithiumkomponente, eine Nickelkomponente, eine Eisenkomponente und eine Aluminiumkomponente umfasst, auf die Oberfläche eines elektrisch leitfähigen Substrats, dessen Oberfläche zumindest Nickel oder eine Nickelbasislegierung umfasst; und
einen Schritt des Unterziehens des mit der wässrigen Lösung der Vorstufe beschichteten elektrisch leitfähigen Substrats einer Wärmebehandlung bei 400 bis 800 °C in einer sauerstoffhaltigen Atmosphäre, wodurch sich auf der Oberfläche des elektrisch leitfähigen Substrats eine Katalysatorschicht aus einem Lithium-Kompositoxid mit einer Steinsalzstruktur bildet, wobei das Lithium-Kompositoxid Lithium (Li), Nickel (Ni), Eisen (Fe) und Aluminium (Al) umfasst und ein Atomverhältnis Li/Ni/Fe/Al/O von (0,4 bis 1,1)/(0,4 bis 0,8)/(0,05 bis 0,2)/(0,05 bis 0,2)/2,0 aufweist.

5. Das Verfahren zur Herstellung einer Anode für die alkalische Wasserelektrolyse gemäß Anspruch 4, wobei das elektrisch leitfähige Substrat, auf das die wässrige Lösung der Vorstufe aufgebracht wurde, einer Wärmebehandlung in einer sauerstoffhaltigen Atmosphäre mit einem Sauerstoffpartialdruck von 0,5 atm oder mehr unterzogen wird.

## Revendications

1. Anode d'électrolyse d'eau alcaline comprenant : un substrat électriquement conducteur dont au moins une surface comprend du nickel ou un alliage à base de nickel ; et
une couche de catalyseur disposée sur la surface du substrat électriquement conducteur, la couche de catalyseur comprenant un oxyde composite de lithium ayant une structure de type sel de roche, dans laquelle
l'oxyde composite de lithium comprend du lithium (Li), du nickel (Ni), du fer (Fe), et de l'aluminium (Al), et a un rapport atomique de Li/Ni/Fe/Al/0 de (0,4 à 1,1)/(0,4 à 0,8)/(0,05 à 0,2)/(0,05 à 0,2)/2,0.

2. Anode d'électrolyse d'eau alcaline selon la revendication 1, dans laquelle un rapport (I₍₀₀₃₎/I₍₁₀₄₎) entre l'intensité de pic de diffraction I₍₀₀₃₎ d'un plan (003) et l'intensité de pic de diffraction I₍₁₀₄₎ d'un plan (104) de la couche de catalyseur, tel que mesuré par diffraction de rayons X, est de 0,1 à 1,9.

3. Anode d'électrolyse d'eau alcaline selon la revendication 1 ou 2, comprenant en outre une couche intermédiaire disposée entre le substrat électriquement conducteur et la couche de catalyseur, la couche intermédiaire comprenant un oxyde de nickel contenant du lithium représenté par la formule de composition LiₓNi₂₋ₓO₂ où 0,02 ≤ x ≤ 0,5.

4. Procédé de production d'une anode d'électrolyse d'eau alcaline, comprenant :
une étape consistant à revêtir une solution aqueuse d'un précurseur comprenant un composant lithium, un composant nickel, un composant fer et un composant aluminium sur une surface d'un substrat électriquement conducteur dont au moins la surface comprend du nickel ou un alliage à base de nickel ; et
une étape consistant à soumettre le substrat électriquement conducteur sur lequel la solution aqueuse du précurseur a été revêtue à un traitement thermique entre 400 et 800 °C dans une atmosphère contenant de l'oxygène, formant ainsi une couche de catalyseur comprenant un oxyde composite de lithium ayant une structure de type sel de roche sur la surface du substrat électriquement conducteur, dans lequel
l'oxyde composite de lithium comprend du lithium (Li), du nickel (Ni), du fer (Fe), et de l'aluminium (Al), et a un rapport atomique de Li/Ni/Fe/Al/0 de (0,4 à 1,1)/(0,4 à 0,8)/(0,05 à 0,2)/(0,05 à 0,2)/2,0.

5. Procédé de production d'une anode d'électrolyse d'eau alcaline selon la revendication 4, dans lequel le substrat électriquement conducteur sur lequel la solution aqueuse du précurseur a été revêtue est soumis à un traitement thermique dans une atmosphère contenant de l'oxygène ayant une pression partielle d'oxygène de 0,5 atm ou plus.
